# EUROPÄISCHE PATENTSCHRIFT

(11) **EP 3 649 614 B1**
(45) Veröffentlichungstag und Bekanntmachung des Hinweises auf die Patenterteilung: **04.08.2021**
(21) Anmeldenummer: 18723503.1
(22) Anmeldetag: 08.05.2018
(51) Int. Cl.: G06T 7/12, G06T 7/62, G06T 7/00, G01B 15/04

(54) **VERFAHREN ZUR BESTIMMUNG VON UNSICHERHEITEN IN MESSDATEN AUS EINER MESSUNG EINES OBJEKTS**
METHOD FOR DETERMINING UNCERTAINTIES IN MEASUREMENT DATA FROM THE MEASUREMENT OF AN OBJECT
PROCÉDÉ DE DÉTERMINATION D'INCERTITUDES DANS DES DONNÉES DE MESURE À PARTIR D'UNE MESURE D'UN OBJET

(30) Priorität: 03.07.2017 DE 102017114811
(43) Veröffentlichungstag der Anmeldung: 13.05.2020
(73) Patentinhaber: Volume Graphics GmbH, 69115 Heidelberg (DE)
(72) Erfinder: GÜNTHER, Thomas, 69115 Heidelberg (DE); REINHART, Christof, 69115 Heidelberg (DE); POLIWODA, Christoph, 69115 Heidelberg (DE)
(74) Vertreter: Patentanwälte Olbricht Buchhold Keulertz
(86) Internationale Anmeldenummer: PCT/EP2018/061939
(87) Internationale Veröffentlichungsnummer: WO 2019/007568

(56) Entgegenhaltungen:
- EP-A1- 2 966 473
- EP-A2- 3 109 826
- DE-A1-102007 003 060
- JONES M W ET AL: "3D distance fields: a survey of techniques and applications", IEEE TRANSACTIONS ON VISUALIZATION AND COMPUTER GRAPHICS, IEEE SERVICE CENTER, LOS ALAMITOS, CA, US, Bd. 12, Nr. 4, Juli 2006 (2006-07), Seiten 581-599, XP002495660, ISSN: 1077-2626, DOI: 10.1109/TVCG.2006.56

## Beschreibung

Die Erfindung betrifft ein computerimplementiertes Verfahren zur Bestimmung von Unsicherheiten in Messdaten aus einer Messung eines Objekts gemäß Anspruch 1 sowie ein Computerprogrammprodukt nach Anspruch 16.

Im Stand der Technik sind eine Vielzahl von Verfahren zur Messung und anschließenden Abbildung von Objekten, wie beispielsweise Werkstücken bekannt. Insbesondere im industriellen Umfeld sind diese Messverfahren mittlerweile als Mittel der Wahl zur Werkstückprüfung etabliert. Dabei finden sich sowohl Verfahren, welche nur die Oberfläche eines Objektes abbilden, als auch Verfahren, welche eine vollständige Darstellung der inneren Struktur eines Objektes ermöglichen. Zur Prüfung von Werkstücken wird dabei zumeist eine Oberfläche oder Oberflächengeometrie eines Werkstücks hinsichtlich ihrer Bemaßungen geprüft und mit einem Referenzwert verglichen.

So kann beispielsweise stichprobenartig geprüft werden, ob ein Herstellungsprozess für ein Werkstück in der Lage ist, die gewünschten Vorgaben für ein Werkstück zu erfüllen.

In EP 2 966 473 A1 wird ein Verfahren zur Vermessung eines Objekts mittels zumindest eines ersten Laserscanners beschrieben, welcher für eine Vielzahl von Messpunkten Messwerte erfasst, wobei zur Vermessung des Objekts nur Messwerte verwendet werden, die über einem vorbestimmten Schwellenwert liegen. Die von dem Laserscanner ermittelten Messpunkte sind mit einem statistischen Rauschen überlagert. Die Stärke des statistischen Rauschens an den Messpunkten wird ermittelt. Weiter wird eine Unsicherheit der Position der Messpunkte auf einer Oberfläche des Objekts ermittelt. Das Verfahren zeichnet sich dadurch aus, dass für zumindest zwei Bereiche von Messpunkten des Laserscanners oder der Laserscanner Schwellenwerte separat ermittelt werden und der für einen Messpunkt verwendete Schwellenwert in Abhängigkeit eines Gütemaßes ausgewählt wird.

In EP 3 109 826 A1 werden ein System und Verfahren zur dreidimensionalen (3D) Sichtprüfung mit einem 3D-Bilderfassungs-System beschrieben. Das System und das Verfahren umfassen das Erfassen von mindestens einem 3D-Bild eines 3D-Objektes unter Verwendung des 3D- Bilderfassungs-Systems; das Extrahieren einer sichtbaren 3D-Laufzeitmaske des 3D-Bildes; das Vergleichen der sichtbaren 3D-Laufzeitmaske mit einer sichtbaren 3D-Referenzmaske unter Verwendung des 3D-Vision-Systems; und, unter Verwendung des 3D-Sichtsystems, die Bestimmung, ob eine Differenz von Pixeln zwischen sichtbaren den 3D Laufzeitmaske und der sichtbaren 3D-Referenzmaske besteht.

Aus DE 10 2007 003 060 A1 wird ein Verfahren zur Bestimmung der Güte eines Messpunktes bei der Kantendetektion für die optische Längenmesstechnik bereitgestellt, so dass für die Berechnung von Geometrieelementen nicht nur die Messpunkte, sondern auch deren jeweilige Güte verwendet werden und somit die Geometrieelemente mit einer geringeren Unsicherheit berechnet werden können. Dabei wird neben der Kantendetektion auch der Signalverlauf im Strukturübergangsbereich, bezugnehmend auf einen idealen Signalverlauf nach den fünf verschiedenen Kriterien (Qualitätskennzahlen), bewertet. Das Verfahren kann an allen Koordinatenmessgeräten angewendet werden, bei denen mindestens ein Bildsensor als Teil der Messsensorik vorhanden ist.

Ein wichtiges Kriterium für die Prüfung von Werkstücken ist, neben den Bemaßungen des Werkstücks, eine Unsicherheit der aus Messdaten einer Messung abgeleiteten Maße. Dabei können je nach verwendetem Abbildungsverfahren eine Vielzahl von Fehlerquellen zu einer Unsicherheit in den Dimensionen einer Abbildung eines Objektes führen. Während systematische Abbildungsfehler beispielsweise durch Verwendung einer Maßverkörperung ermittelt werden können, sind im Stand der Technik wenige Verfahren bekannt, welche auch statistische Abbildungsfehler in ausreichendem Maße berücksichtigen und insbesondere quantifizieren können.

Vor diesem Hintergrund liegt der vorliegenden Erfindung die objektive technische Aufgabe zugrunde ein verbessertes Verfahren zur Bestimmung von Unsicherheiten in Messdaten aus einer Messung eines Objektes zu schaffen, welches die vorgenannten Nachteile des Standes der Technik überwindet.

Hauptmerkmale der Erfindung sind in Anspruch 1 sowie in Anspruch 16 angegeben. Ausgestaltungen sind Gegenstand der Ansprüche 2 bis 15.

In einem ersten Aspekt betrifft die Erfindung ein computerimplementiertes Verfahren zur Bestimmung von Unsicherheiten in Messdaten aus einer Messung eines Objektes, wobei durch die Messung eine digitale Darstellung des Objekts erzeugt wird. Die Objektdarstellung weist eine Vielzahl von Bildinformationen des Objekts auf, wobei eine Bildinformation einen Wert einer Messgröße für das Objekt an einer definierten Position des Objekts anzeigt. Die Bildinformationen sind mit einem statistischen Rauschen überlagert, wobei das Verfahren die nachfolgenden Schritte aufweist.

In einem ersten Verfahrensschritt werden zunächst die Messdaten ermittelt. Anschließend wird ein Distanzfeld aus den Bildinformationen der Objektdarstellung ermittelt, wobei das Distanzfeld eine Vielzahl von Distanzwerten aufweist. Ein Distanzwert gibt dabei für einen bestimmten Punkt des Distanzfelds den kürzesten Abstand des Punktes zu einer nächstgelegenen Materialgrenzfläche des Objekts an. Anschließend wird eine Stärke des statistischen Rauschens der Bildinformationen der Messpunkte der Messdaten und auf Grundlage der Stärke des statistischen Rauschens eine Unsicherheit der Distanzwerte des Distanzfeldes ermittelt. Aus der Unsicherheit der Distanzwerte des Distanzfeldes wird dann eine Unsicherheit der Lage wenigstens eines Punktes auf wenigstens einer Materialgrenzfläche ermittelt.

Zur Ermittlung der Unsicherheit der Lage eines Punktes auf wenigstens einer Materialgrenzfläche kann beispielsweise zunächst aus einer Teilmenge von Distanzwerten des Distanzfeldes die Lage eines Punktes einer Materialgrenzfläche ermittelt werden. Anschließend wird als Unsicherheit der ermittelten Lage des Punktes die mittlere Unsicherheit all jener Distanzwerte angenommen, welche bei der Ermittlung der Lage des Punktes der Materialgrenzfläche berücksichtigt wurden. Neben der Bildung eines einfachen Mittelwerts kann auch eine Gewichtung der Unsicherheiten der Distanzwerte vorgesehen sein, welche bei der Bestimmung der Lage des Punktes der Materialgrenzfläche berücksichtigt wurden. Dabei kann beispielsweise den Unsicherheiten von vergleichsweise hohen Distanzwerten ein geringeres Gewicht zugeordnet werden, als den Unsicherheiten von vergleichsweise geringen Distanzwerten.

Der Erfindung liegt die Erkenntnis zugrunde, dass ein wesentlicher Teil der Unsicherheit einer Abbildung eines Objekts durch ein bildgebendes Verfahren von einem statistischen Rauschen verursacht wird, dem die aufgenommenen Messdaten unterliegen. Ein statistisches Rauschen kann hierbei durch eine Vielzahl von Faktoren auftreten. Beispielsweise kann ein Rauschen bereits einem zur Bestimmung der Messdaten verwendeten Messverfahren inhärent sein. So kann beispielsweise ein zur Bestimmung der Messdaten verwendeter elektronischer Detektor ein definiertes Rauschverhalten aufweisen. Ferner kann auch in Folge der Verarbeitung von Messdaten bzw. den Messdaten zugrundeliegenden Rohdaten ein weiteres Rauschen eingeführt werden. Unter einem statistischen Rauschen wird dabei ein Rauschen verstanden, dessen Auswirkung auf die verrauschten Messdaten einer statistischen, also im Wesentlichen zufälligen Verteilung, wie beispielsweise einer Normalverteilung folgt. Die Art der statistischen Verteilung, welche dem Rauschen zugrunde liegt kann dabei über die Abbildung des Objekts lokal unterschiedlich ausgebildet sein, wobei dem Rauschen neben symmetrischen Verteilungen, zu denen die vorgenannte Normalverteilung zählt, auch asymmetrische Verteilungen zugrunde liegen können.

Dabei ist das statistische Rauschen üblicherweise durch eine definierte Stärke gekennzeichnet, mit der es die Bildinformationen der Objektdarstellungen beeinflusst. Ist die Stärke des statistischen Rauschens bekannt, kann abgeschätzt werden, wie groß die Unsicherheit einer aus den verrauschten Bildinformationen abgeleiteten Distanzinformation des Distanzfeldes ist. Sind die Unsicherheiten der Distanzwerte eines Distanzfeldes bekannt, kann hieraus wiederum direkt eine Unsicherheit einer aus dem Distanzfeld abgeleiteten Lage einer Materialgrenzfläche und insbesondere der Lage einzelner Punkte auf der Materialgrenzfläche eines dargestellten Objekts abgeleitet werden. Folglich erlaubt das erfindungsgemäße Verfahren bei einer Bestimmung von Materialgrenzflächen eines Objekts aus den Bildinformationen einer gemessenen Objektdarstellung eine Abschätzung von Fehlern für aus der Objektdarstellung abgeleitete Lagen von Materialgrenzflächen des Objekts bzw. von Punkten auf solchen Materialgrenzflächen. Somit können durch das erfindungsgemäße Verfahren geometrische Eigenschaften eines abgebildeten Objekts mit einem Fehler bewertet werden.

Dabei kann das Distanzfeld die Lage einer Materialgrenzfläche auf im Wesentlichen zwei Wegen kodieren. In einem ersten Ansatz gibt ein Distanzwert des Distanzfeldes lediglich den Betrag des Abstands eines entsprechenden Punktes des Distanzfeldes von der nächstliegenden Materialgrenzfläche wieder. In diesem Fall ist jedoch durch die reine Distanzinformation an einem Punkt des Distanzfeldes noch nicht klar, auf welcher Seite einer Materialgrenzfläche der Punkt angeordnet ist. Diese Information kann jedoch zusätzlich in dem Distanzfeld codiert werden, indem die Distanzwerte zusätzlich mit einem Vorzeichen behaftet sind. Distanzwerten von Datenpunkten, welche sich auf einer ersten Seite der Materialgrenzfläche befinden, wird dabei ein positives Vorzeichen zugeordnet, während Datenpunkten auf der zweiten Seite der Materialgrenzfläche ein Distanzwert mit einem negativen Vorzeichen zugeordnet wird. Aus dem Vorzeichen eines Distanzwerts eines Datenpunkts kann dann beispielsweise abgeleitet werden, ob sich ein Datenpunkt innerhalb einer Geometrie bzw. eines Körpers befindet, oder außerhalb. Diese zusätzliche Information kann für das Ermitteln von Maßen des abgebildeten Objekts verwendet werden.

Ein solches Distanzfeld mit vorzeichenbehafteten Distanzwerten ist dabei als "signed distance field" (SDF) bekannt. Dabei kann ein vorzeichenloses Distanzfeld nach einer Ausführungsform in ein vorzeichenbehaftetes Distanzfeld umgerechnet werden, indem die Distanzwerte so angepasst werden, dass ihr Betrag zwar unverändert bleibt, der Gradient des gesamten Distanzfeldes jedoch an jeder Stelle gleich 1 ist.

Unter einer Messung, aus der die Bildinformationen erhalten werden, ist dabei jede beliebige Form einer Abbildung des Objekts oder Eigenschaften des Objekts zu verstehen. Beispielsweise kann die Messung im Rahmen einer magnetresonanztomographischen Untersuchung erfolgen. Die dabei gewonnenen Bildinformationen quantifizieren Eigenschaften des Objekts wie beispielsweise Materialbeschaffenheit, Lage von Oberflächen oder ähnliche Parameter, welche aus Messgroßen, wie beispielsweise einer Spin-Relaxationszeit oder ähnlichem ableitbar sind. Zur Ermittlung der Messdaten kann dabei sowohl die Durchführung einer Messung als auch das Auslesen eines Speichermediums vorgesehen sein. Beispielsweise kann so auf bereits durchgeführte Messungen und archivierte Daten zurückgegriffen werden, welche im Nachhinein hinsichtlich einer Unsicherheit der Abbildung bewertet werden sollen.

Bei der zuvor beschriebenen Stärke des statistischen Rauschens der Bildinformationen handelt es sich um ein Maß, welches beschreibt, wie stark die Bildinformationen von dem statistischen Rauschen beeinflusst werden. Der Effekt des die Messdaten bzw. Bildinformationen überlagernden Rauschen besteht im Wesentlichen darin, dass der ermittelte Zahlenwert für eine Messgröße um einen bestimmten Betrag von dem eigentlich ohne Rauschen ermittelten Zahlenwert abweicht. Dabei kann ein Zahlenwert aufgrund des Rauschen sowohl zu klein, als auch zu groß ausfallen. Zur Ermittlung der Stärke des Rauschens gibt es verschiedene Ansätze, welche im Folgenden noch näher diskutiert werden. Die Stärke des statistischen Rauschens kann dabei, wie eine Bildinformation auch, als Zahlenwert dargestellt werden, welcher beschreibt, wie stark die Bildinformationen aufgrund des Rauschens von dem eigentlich zu erwartenden Wert abweichen.

Zur Ermittlung einer Unsicherheit eines Distanzwerts aus der Stärke des statistischen Rauschens kann dabei nach einer Ausführungsform wie folgt vorgegangen werden: Zunächst wird aus der Stärke des statistischen Rauschens ein Fehler der Bildinformation eines definierten Punktes des Objekts ermittelt. Anschließend wird eine Rechenvorschrift ermittelt, mit der Distanzwerte aus den Bildinformationen der Objektdarstellung ermittelt werden. Aus der Wirkung des Fehlers auf das Ergebnis der Rechenvorschrift wird dann die Unsicherheit des Distanzwertes ermittelt. Zur Ermittlung des Fehlers einer Bildinformation kann beispielsweise der Zahlenwert der ermittelten Stärke des statistischen Rauschens als Fehlerintervall für den Zahlenwert einer Bildinformation angenommen werden.

Alternativ hierzu kann auch eine Umrechnung des Zahlenwerts der ermittelten Stärke des statistischen Rauschens erfolgen, sodass durch den so erhaltenen Wert eine Quantifizierung des Fehlers der Bildinformation möglich ist. Dies kann beispielsweise notwendig werden, wenn die Stärke des statistischen Rauschens aus eine Information abgeleitet wird, welche von der eigentlichen Bildinformation zunächst abweicht, jedoch in diese umrechenbar ist. Dabei muss ein Fehlerintervall für den Zahlenwert einer Bildinformation nicht zwingend symmetrisch um den Zahlenwert angeordnet sein. Vielmehr kann insbesondere, wenn dem statistischen Rauschen eine asymmetrische statistische Verteilung zugrunde liegt, ein Fehlerintervall auch asymmetrisch um den Zahlenwert einer Bildinformation verteilt sein. So ist es beispielsweise möglich, dass aus der Abschätzung des statistischen Rauschens einer Bildinformation mit einem Zahlenwert von 150 ein Fehlerintervall zugeordnet wird, dass sich von 147 bis 156 erstreckt. Gleichermaßen kann auch für die Angabe der Unsicherheit eines Distanzwertes, oder einer Lage eines Punktes auf einer Materialgrenzfläche sowohl ein symmetrisches als auch ein asymmetrisches Fehlerintervall ermittelt werden.

Die Rechenvorschrift zur Ermittlung der Distanzwerte kann dabei vielfältige Formen annehmen. Sie wird jedoch in jedem Fall als Eingangswert die Bildinformationen der Objektdarstellung beinhalten, welche anhand einer mathematischen Formel in einen Distanzwert umgerechnet werden. Aus der Kenntnis einer solchen Formel kann beispielsweise mittels der Gaußschen Fehlerfortpflanzung die Wirkung eines Fehlers der Eingangswerte auf das Ergebnis der Berechnung bestimmt werden.

Beispielsweise kann nach einer Ausführungsform die Unsicherheit eines Distanzwerts aus dem Quotienten der Stärke des statistischen Rauschens der dem Distanzwert zugrundeliegenden Bildinformationen und dem Gradienten der Bildinformationen im Bereich des dem Distanzwert zugeordneten Punktes des Distanzfelds ermittelt werden.

Zuvor wurde bereits ausgeführt, dass im Zuge des erfindungsgemäßen Verfahrens die Stärke des statistischen Rauschens der Bildinformationen der Messdaten ermittelt wird. Dabei kann beispielsweise die Stärke des Rauschens global für das gesamte Messbild beziehungsweise die gesamte Objektdarstellung ermittelt werden. Dies ist beispielsweise dann sinnvoll, wenn sich das statistische Rauschen, welches die Messdaten überlagert, über den gesamten abgebildeten Bereich in gleichem Maße niederschlägt.

In den meisten Fällen ist jedoch die Auswirkung des statistischen Rauschens der Bildinformationen in verschiedenen Bereichen einer Objektdarstellung unterschiedlich. Dies liegt zum einen an unterschiedlichen Charakteristika der Abbildungsvorrichtung für unterschiedliche Bereiche der Abbildung sowie an einem häufig zu beobachtenden Zusammenhang der Auswirkung des Rauschens von den Bildinformationen selbst. Aus diesem Grund ist nach einer weiteren Ausführungsform vorgesehen, dass das Verfahren die Unterteilung der Messpunkte in räumliche Bereiche des Objektes umfasst, wobei die Stärke des statistischen Rauschens jeweils separat für die unterschiedlichen räumlichen Bereiche der Messdaten ermittelt wird. Dabei werden die Bereiche vorzugweise so ausgewählt, dass innerhalb eines Bereiches die Auswirkung des statistischen Rauschens auf die Bildinformation weitestgehend konstant ist. In diesem Fall kann einem kompletten Bereich ein einziger Wert für die Stärke des statistischen Rauschens zugeordnet werden.

Zur Ermittlung der Stärke des statistischen Rauschens für einen Bereich kann dann nach einer Ausführungsform vorgesehen sein, dass diese aus den Bildinformationen eine Teilmenge der Messpunkte des Bereichs ermittelt wird. Auf diese Weise kann der Rechenaufwand zur Ermittlung der Rauschinformationen reduziert werden, ohne dass ein signifikanter Informationsverlust zu befürchten wäre. Aufgrund der Homogenität der Wirkung des Rauschens innerhalb eines Bereiches aufgrund der entsprechenden Auswahl des Bereichs, ist ab einer bestimmten Zahl von Eingangswerten zur Ermittlung der Stärke des Rauschens durch eine weitere Hinzunahme weiterer Punkte beziehungsweise Messdaten der Punkte kein relevanter Zugewinn an Informationen bezüglich der Stärke des Rauschens mehr zu erwarten. Allerdings verbessert sich die Genauigkeit der Abschätzung der Stärke des Rauschens aus der Varianz bei einer steigenden Zahl von dabei berücksichtigten Werten. Effektiv kann demnach die gewünschte Genauigkeit der Abschätzung der Varianz gegenüber der hierdurch erzeugten Rechenlast abgeschätzt, und die Zahl der verarbeiteten Messwerte dementsprechend angepasst werden.

Die Stärke des statistischen Rauschens der Bildinformationen für einen der Bereiche kann dabei nach einer Ausführungsform wie folgt ermittelt werden:
Zunächst wird ein Durchschnittswert der Bildinformationen des Bereiches ermittelt. Anschließend wird die mittlere Abweichung der Bildinformation des Bereiches von diesem Durchschnittswert ermittelt und die mittlere Abweichung als Stärke des statistischen Rauschens der Bildinformation definiert. Dieser Ansatz kann insbesondere in Bereichen mit einer homogenen Verteilung der Wirkung des statistischen Rauschens und einer homogenen Verteilung der Bildinformation angewendet werden. Eine homogene Verteilung der Bildinformation liegt beispielsweise vor, wenn über einen bestimmten Bildausschnitt nur ein einziges, definiertes Material eines abgebildeten Objekts durch entsprechende Bildinformationen dargestellt ist.

Die so ermittelte Information bezüglich der Stärke des statistischen Rauschens kann beispielsweise auch auf Bereiche mit einer nicht-homogenen Verteilung der Bildinformationen extrapoliert werden. Hierzu kann beispielsweise vorgesehen sein, dass unterschiedliche Bereiche definiert werden, in denen die vorgenannte Ermittlung der Stärke des statistischen Rauschens aufgrund der Homogenität der Bildinformationen und/oder der Wirkung des statistischen Rauschens möglich ist. Bereiche, welche sich zwischen solchen homogenen Bereichen erstrecken, können dann durch ein Interpolationsverfahren hinsichtlich der Wirkung des statistischen Rauschens abgeschätzt werden.

In einem hierzu alternativen Ansatz kann es sich bei der Stärke des statistischen Rauschens nach einer Ausführungsform um die Standardabweichung des statistischen Rauschens handeln. Die Verwendung der Standardabweichung des statistischen Rauschens als Maß für die Stärke des Rauschens hat dabei den Vorteil, dass die Standardabweichung ein im Allgemeinen leicht zu ermittelndes Maß für Unsicherheit einer Größe angibt, die einer statistischen Schwankung unterliegt, wie es bei einem statistischen Rauschen der Fall ist.

In Bereichen mit einer inhomogenen Verteilung der Grauwerte wie beispielsweise im Bereich von Materialgrenzflächen kann eine Bestimmung der Stärke des statistischen Rauschens beispielsweise erfolgen, indem zunächst ein theoretisches Modell für den Verlauf der Grauwerte in dem entsprechenden Bereich erstellt wird. Hierzu kann beispielsweise ein theoretisches Modell der Grauwerte durch ein Fit-Verfahren an die tatsächlichen Grauwerte gefittet werden. Die Abweichungen der einzelnen Grauwerte von dem durch das gefittete Modell vorgesehenen Verlauf der Grauwerte kann dann als durch das statistische Rauschen verursacht interpretiert werden und der Ermittlung der Stärke des statistischen Rauschens zugrunde gelegt werden.

Dabei ist nach einer Ausführungsform vorgesehen, dass die Standardabweichung des statistischen Rauschens für einen Punkt der Objektdarstellung aus den Bildinformationen innerhalb einer definierten Umgebung um den Punkt bestimmt wird. Beispielsweise kann in einer zweidimensionalen Darstellung eines Objekts ein Kreis eines bestimmten Radius um einen Punkt der Objektdarstellung gezogen werden, wobei alle Bildinformationen innerhalb dieses Kreises zur Ermittlung der Standardabweichung herangezogen werden. So kann zum einen der Rechenaufwand zur Ermittlung der Standardabweichung reduziert werden, während gleichzeitig die Ermittlung der Standardabweichung auf einen Bereich eingeschränkt werden kann, innerhalb dessen die Auswirkung des statistischen Rauschens weitestgehend konstant ist. Die Größe der definierten Umgebung kann dabei in ihrer Ausdehnung so bemessen werden, dass eine ausreichende Statistik vorliegt, aus der eine belastbare Information hinsichtlich der Stärke des statistischen Rauschens abgeleitet werden kann. Gleichzeitig kann bei der Wahl der Größe der Umgebung der entstehende Rechenaufwand zur Bestimmung der Stärke des Rauschens berücksichtigt werden, sodass der Umfang der Statistik gegen den entstehenden Rechenaufwand abgewogen werden kann.

Neben der zuvor beschriebenen Ermittlung von Unsicherheiten bezüglich der Lage von Materialgrenzflächen eines Objekts bzw. einzelner Punkte auf solchen Materialgrenzflächen, ist nach einer Ausführungsform vorgesehen, dass die Information bezüglich der Unsicherheit von Distanzwerten genutzt wird, um für weitere Eigenschaften des dargestellten Objekts einen Fehler abzuschätzen. Hierzu ist vorgesehen, dass das Verfahren ferner das Ermitteln wenigstens einer Abmessung des Objekts aus den Distanzwerten des Distanzfeldes und das Ermitteln einer Unsicherheit der Abmessung auf Grundlage der Unsicherheit der Distanzwerte aufweist. Unter einer Abmessung ist dabei beispielsweise der Durchmesser einer Bohrung oder die Länge einer Kante zu verstehen. Abmessungen des dargestellten Objekts können dabei beispielsweise direkt aus den durch die Distanzwerte des Distanzfeldes kodierten Lagen von Materialgrenzflächen ermittelt werden.

Dabei kann die Ermittlung einer Abmessung sowie der Unsicherheit einer Abmessung sowohl direkt aus den Distanzwerten und den entsprechenden Unsicherheiten selbst erfolgen, als auch aus den ermittelten Lagen der Materialgrenzflächen und der ermittelten Unsicherheit der Lagen von Punkten auf den Materialgrenzflächen.

Neben der zuvor beschriebenen Ermittlung von Abmessungen eines dargestellten Objekts direkt aus den durch das Distanzfeld kodierten Materialgrenzflächen, kann nach einer weiteren Ausführungsform auch die eigentlich zu erwartende geometrische Form eines Objekts bei der Ermittlung von Abmessungen berücksichtigt werden. Hierzu ist nach einer Ausführungsform vorgesehen, dass das Ermitteln einer Abmessung des Objekts aus den Distanzwerten des Distanzfelds das Ermitteln und Einpassen einer Soll-Geometrie des Objekts in das Distanzfeld durch Anwendung eines Fit-Verfahrens aufweist. Anhand der so eingepassten Soll-Geometrie wird dann nach der Ausführungsform die Abmessung des Objekts ermittelt.

Auf diese Weise kann ein direkter Vergleich zwischen einer vorgesehenen Soll-Geometrie des dargestellten Objekts und der tatsächlichen Ist-Geometrie gezogen werden, wobei entsprechende Abmessungen der Soll-Geometrie direkt mit den entsprechenden aus der Ist-Geometrie ermittelten Abmessungen des Objekts unter Berücksichtigung der entsprechenden Unsicherheiten der Abmessungen verglichen werden können. So kann beispielsweise geprüft werden, ob bei einem untersuchten Objekt vorgegebene Fertigungstoleranzen eingehalten wurden, oder ob ein untersuchtes Objekt aufgrund der ermittelten Abmessungen unter Berücksichtigung der Unsicherheiten für weitere Montageschritte verwendet werden kann.

Dabei ist unter einem Fit-Verfahren, welches zur Einpassung der ermittelten Soll-Geometrie des Objekts in das Distanzfeld Anwendung findet, jedes mathematische Verfahren zu verstehen, welches dazu geeignet ist eine bestimmte Geometrie in digitale Daten so einzupassen, dass die Geometrie eine möglichst gute Deckung mit den digitalen Daten aus der Darstellung des Objekts aufweist. Die Unsicherheit der Distanzwerte kann dabei im Rahmen einer Bestimmung der Fehlerfortpflanzung bei der Anwendung eines Fit-Verfahrens berücksichtigt werden.

So kann nach einer Ausführungsform der Erfindung, beispielsweise zum Einpassen der ermittelten Soll-Geometrie, das Verfahren der kleinsten Quadrate angewendet werden, welches auch als Gauß-Fit im Stand der Technik bekannt ist. Dabei wird eine Soll-Geometrie so in die durch die Messdaten repräsentierten Materialgrenzflächen eingepasst, dass der mittlere quadratische Abstand der Soll-Geometrie von den Materialgrenzflächen aus der digitalen Darstellung, möglichst klein ist. Dieses Verfahren ist im Allgemeinen mit einem geringen Rechenaufwand durchführbar und ist insbesondere dann geeignet, wenn keine Randbedingungen an die Lage der Soll-Geometrie relativ zu den durch die Messpunkte dargestellten Materialgrenzflächen der digitalen Darstellung existieren.

In einigen Fällen kann es jedoch vorkommen, dass eine ermittelte Soll-Geometrie mit einer Reihe von Randbedingungen in die digitale Darstellung des Objekts eingepasst werden soll. Hierzu ist nach Ausführungsformen vorgesehen, dass die ermittelte Soll-Geometrie als eingeschriebene oder umschreibende Figur in das Distanzfeld eingepasst wird. Unter einer eingeschriebenen Figur ist dabei eine Figur zu verstehen, welche vollständig innerhalb der durch das Distanzfeld codierten Materialgrenzflächen des Objekts liegt. Umgekehrt ist eine umschreibende Figur, eine Figur, welche vollständig außerhalb der durch das Distanzfeld codierten Materialgrenzfläche liegt. Beispielsweise ist die Verwendung einer eingeschriebenen Figur insbesondere dann sinnvoll, wenn beispielsweise der Innendurchmesser einer Bohrung durch Einpassen einer entsprechenden Soll-Geometrie, nämlich eines Zylinders, ermittelt werden soll. In diesem Fall ist meist für Praxisanwendungen ausschließlich relevant, ob die Bohrung einen gewissen Mindestdurchmesser aufweist. Durch Einpassung der Soll-Geometrie als eingeschriebene Figur ist dabei gewährleistet, dass die Abmessungen der eingepassten Soll-Geometrie den Mindestdurchmesser einer Bohrung wiedergeben.

Im umgekehrten Fall, bei dem beispielsweise ein aus einem Objekt hervorstehender Bolzen durch eine Soll-Geometrie abgebildet werden soll, ist es vorteilhaft, wenn die Soll-Geometrie, wiederum ein Zylinder, als umschreibende Figur in das Distanzfeld eingepasst wird. In diesem Fall ist nämlich durch die eingepasste Geometrie der maximale Durchmesser des hervorstehenden Bolzens abgebildet. Dabei ist es durchaus möglich, dass an verschiedenen Bereichen des abgebildeten Objekts jeweils separat entschieden werden muss, ob eine einzupassende Soll-Geometrie als eingeschriebene oder umschreibende Figur in das Distanzfeld eingepasst werden soll.

Nach einer weiteren Ausführungsform ist es auch möglich, dass zum Einpassen der ermittelten Soll-Geometrie ein Minimum-Zonen-Fit angewendet wird. Die einzelne Auswahl, welches Fit-Verfahren zur Anwendung kommt, ist dabei, wie zuvor beschrieben, abhängig von der jeweiligen Anwendungssituation.

Das Ermitteln des im Rahmen des erfindungsgemäßen Verfahrens verwendeten Distanzfeldes kann dabei nach einer Ausführungsform erfolgen, indem zunächst die Lage von Materialgrenzflächen aus den Bildinformationen der Objektdarstellung ermittelt werden. Anschließend werden für die Datenpunkte des Distanzfeldes jeweils zu einem Datenpunkt eine nächstliegende Materialgrenzfläche sowie der jeweilige Abstand der Datenpunkte von der jeweiligen nächstliegenden Materialgrenzfläche ermittelt. Der jeweils ermittelte Abstand wird dann den jeweiligen Datenpunkten als Distanzwert zugeordnet. Zur Ermittlung der Lage von Materialgrenzflächen aus den Bildinformationen der Objektdarstellung können im Stand der Technik allgemein bekannte Verfahren zur Kantenerkennung verwendet werden. Beispiele für solche Verfahren sind der Canny-Algorithmus oder der ISO50-Algorithmus.

Nach einer Ausführungsform handelt es sich bei der Objektdarstellung um eine gerasterte Darstellung des Objekts, wobei die gerasterte Darstellung eine Vielzahl von in einem Raster angeordneten Messpunkten einer Messung des Objekts aufweist, wobei ein Messpunkt wenigstens eine Bildinformation aufweist.

Nach einer weiteren Ausführungsform ist ferner vorgesehen, dass es sich bei der Messung um eine computertomographische Messung handelt, wobei die Bildinformationen eines Messpunktes die lokale Röntgenabsorption des Objekts an der Stelle des Messpunktes beschreibt. Die Computertomographie hat dabei den Vorteil, dass auch Innenbereiche eines Objekts ermittelt und abgebildet werden können, sodass eine zerstörungsfreie ganzheitliche Darstellung eines Objekts möglich ist.

Insbesondere bei der Verwendung einer computertomographischen Messung zur Erzeugung der Objektdarstellung, kann die statistische Verteilung, welche dem Rauschen der Bildinformationen zugrunde liegt, von einer symmetrischen Verteilung, wozu auch die zuvor benannte Normalverteilung zu zählen ist, abweichen und über die Objektdarstellung lokal variieren. Dieser Umstand liegt darin begründet, dass im Zuge einer computertomographischen Messung zunächst Projektionsdaten gemessen werden, welche mittels einer entsprechenden Rekonstruktionsmathematik in eine Abbildung des Objekts umgerechnet werden müssen. Die hierbei verwendete Mathematik ist jedoch im Allgemeinen nicht linear. Eine direkte Folge hieraus ist, dass das eigentlich im Wesentlichen symmetrische, gaußförmige Rauschverhalten eines Detektors eines Computertomographen nicht zwingend zu einem symmetrischen Rauschverhalten der Bildinformationen der Objektdarstellung führt. Vielmehr können in der Objektdarstellung die statistischen Verteilungen, welche dem Rauschen der Bildinformationen zugrunde liegen auch asymmetrisch werden und/oder lokal stark variieren. So ist beispielsweise häufig zu beobachten, dass helle Bereiche einer computertomographischen Abbildung, welche eine starke Röntgenabsorption durch das untersuchte Objekt andeuten, ein stärkeres Rauschen aufweisen, als dunkle Bereiche der Abbildung.

Aus diesem Grund kann es sinnvoll sein, das Rauschverhalten bzw. die Stärke des statistischen Rauschens der Bildinformationen nicht aus den Bildinformationen der Objektdarstellung abzuleiten, sondern aus den der Objektdarstellung zugrundeliegenden Projektionsdaten.

In einem weiteren Aspekt betrifft die Erfindung ein Computerprogrammprodukt mit auf einem Computer ausführbaren Instruktionen, welche auf einem Computer ausgeführt den Computer dazu veranlassen, das Verfahren, wie es zuvor beschrieben wurde, auszuführen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Figur 1: eine schematische Darstellung einer Objektdarstellung mit einem Distanzfeld,
- Figur 2: eine schematische Darstellung einer Objektdarstellung mit und ohne Rauschen,
- Figur 3: eine schematische Darstellung der Verteilung von Grauwerten aufgrund eines statistischen Rauschens,
- Figur 4: eine schematische Darstellung einer Objektdarstellung mit mehreren Bereichen und
- Figur 5: eine schematische Darstellung einer Einpassung einer Soll-Geometrie anhand der Materialgrenzflächen eines Objekts,
- Figur 6: eine schematische Darstellung einer Einpassung einer Soll-Geometrie als eingeschriebene oder umschreibende Figur,
- Figur 7: eine schematische Darstellung der Einpassung einer Soll-Geometrie anhand eines Minimum-Zonen-Fits und
- Figur 8: ein Flussdiagramm eines erfindungsgemäßen Verfahrens.

Im Folgenden werden einander ähnliche oder identische Merkmale mit denselben Bezugskennzeichen gekennzeichnet.

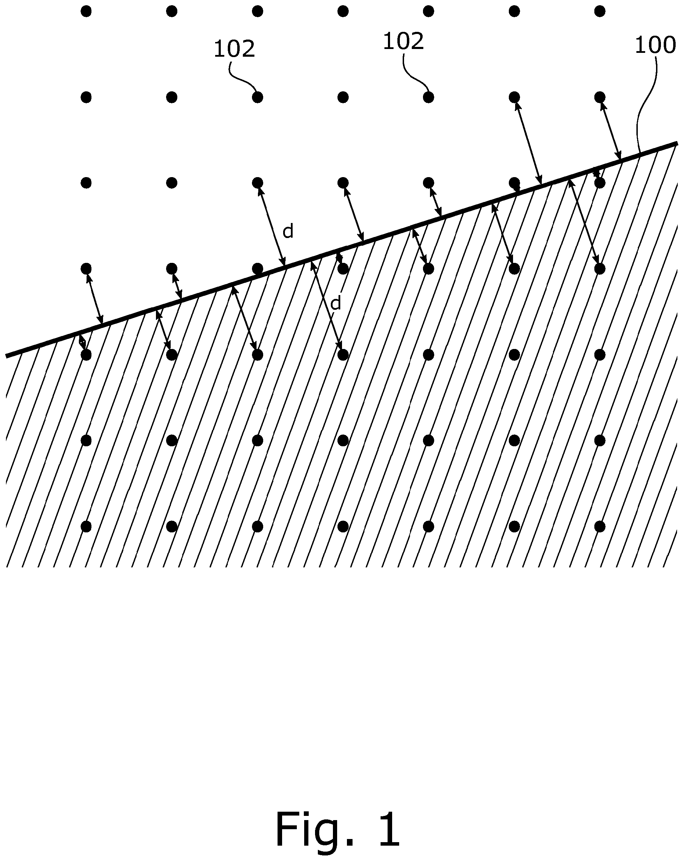

Die Figur 1 zeigt eine schematische Darstellung einer Objektdarstellung, wobei die Objektdarstellung durch ein Distanzfeld überlagert ist. In der dargestellten Ausführung wird das Objekt im Wesentlichen durch seine Materialgrenzfläche 100 dargestellt, welche sich diagonal durch den Bildausschnitt erstreckt. Beispielsweise kann es sich bei der Materialgrenzfläche 100 um den Übergang handeln, an dem ein erstes Material eines dargestellten Objekts an die Umgebungsluft angrenzt. Bei dem dargestellten Objekt kann es sich beispielsweise um ein Werkstück handeln, welches aus einem Metall oder einem Kunststoff besteht.

Das Distanzfeld ist in der dargestellten Ausführung im Wesentlichen durch Datenpunkte 102 dargestellt, welche in einem regelmäßigen isotropen Raster die Objektdarstellung überlagern. Neben einer solchen gerasterten Darstellung eines Distanzfeldes kann das Distanzfeld auch als kontinuierliches Skalarfeld vorliegen. Aus Gründen der Darstellbarkeit ist das Distanzfeld in der Figur 1 jedoch als gerastertes Feld wiedergegeben. Neben dem in Figur 1 dargestellten orthogonalen Raster könnte ein Raster zur Darstellung eines Distanzfeldes jede beliebige Geometrie aufweisen, welche geeignet ist, ein fortlaufendes Raster zu bilden. Es wird ferner darauf hingewiesen, dass die in Figur 1 gewählte zweidimensionale Darstellung lediglich aus Gründen der einfacheren Darstellbarkeit gewählt wurde. Die beschriebenen Sachverhalte sind analog auch auf dreidimensionale Darstellungen eines Objekts übertragbar. So ist beispielsweise in Figur 1 ein zweidimensionales Raster aus quadratischen Zellen dargestellt, welches ohne Weiteres in eine dritte Dimension übertragen werden kann, in der das Raster durch gleichmäßige Würfel aufgebaut wäre.

Den einzelnen Datenpunkten 102 des Distanzfeldes sind Distanzwerte zugeordnet, welche beschreiben, wie groß der minimale Abstand zwischen einem Datenpunkt 102 und der Materialgrenzfläche 100 ist. Der minimale Abstand zwischen einem Datenpunkt 102 und der Materialgrenzfläche 100 erstreckt sich im Allgemeinen senkrecht zu der Materialgrenzfläche 100. In der Figur 1 sind exemplarisch die Abstände für eine Teilmenge der Datenpunkte 102 dargestellt, welche sich in unmittelbarer Umgebung der Materialgrenzfläche 100 befinden.

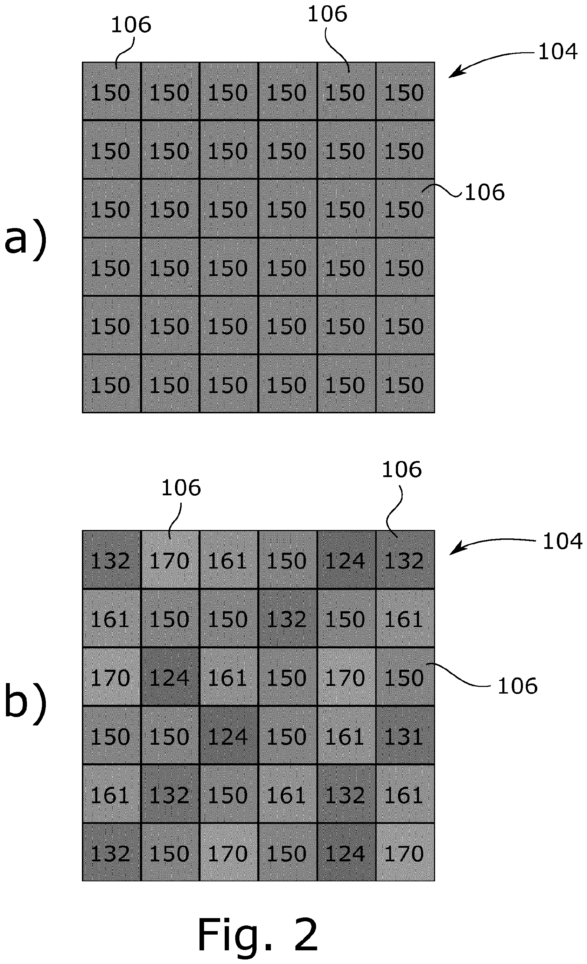

Die Darstellung einer Materialgrenzfläche 100, wie sie in der Figur 1 gezeigt ist, kann beispielsweise aus einer gerasterten Darstellung des Objekts abgeleitet werden, welche aus einer computertomographischen Untersuchung des Objekts resultiert. Dabei wird ein Objekt aus verschiedenen Richtungen mit Röntgenstrahlung belichtet, wobei die Stärke der das Objekt transmittierenden Röntgenstrahlung durch einen hinter dem Objekt angeordneten Detektor aufgenommen wird. Aus der Summe der so erzeugten Röntgenaufnahmen aus unterschiedlichen Richtungen kann eine dreidimensionale Darstellung des Objekts rekonstruiert werden. Dabei wird üblicherweise ein dreidimensionales Raster, bestehend aus regelmäßigen Volumenpixeln (Voxel) verwendet, wobei den einzelnen Voxeln jeweils ein Grauwert zugeordnet wird, der repräsentativ für die ermittelte Röntgendichte des Objekts an der Position des Voxels ist. Innerhalb eines massiven Körpers ist dabei theoretisch zu erwarten, dass der die Röntgendichte charakterisierende Grauwert der Objektdarstellung einen konstanten Wert aufweist. Ein entsprechender Bildausschnitt, welcher einen massiven Materialbereich, ohne jeden Materialübergang bzw. ohne Materialgrenzfläche zeigt, ist in der Figur 2 a) dargestellt.

Die Figur 2 a) zeigt eine schematische Darstellung eines Ausschnitts einer Darstellung eines Objekts 104, wobei der Ausschnitt einen Teilbereich mit insgesamt 36 Messpunkten 106 umfasst. Die einzelnen Messpunkte 106 sind dabei in einem regelmäßigen quadratischen Gitter angeordnet. In den Messpunkten 106 ist jeweils eine Bildinformation des dargestellten Objekts in Form eines Grauwertes kodiert. Wie zuvor beschrieben wurde, kann es sich beispielsweise bei der Figur 2 a) um eine Abbildung eines Objekts mittels eines Computertomographen handeln. In dem dargestellten Beispiel sind die Grauwerte der Pixel bzw. Messpunkte 106 als 8-Bit-Wert kodiert. Folglich können die Grauwerte Zahlenwerte zwischen und 0 und 255 annehmen. Im dargestellten Beispiel haben alle Messpunkte 106 einheitlich den Grauwert 150.

Eine Darstellung, wie sie in Figur 2 a) abgebildet ist, liegt beispielsweise vor, wenn ein Bereich mit einer homogenen Materialdichte eines Objekts abgebildet ist, unter der Annahme, dass durch das abbildende System, also beispielsweise den Computertomographen, keine Abbildungsfehler entstehen.

Tatsächlich ist es jedoch nie der Fall, dass ein an sich homogener Bereich eines dargestellten Objekts in der Objektdarstellung 104 auch tatsächlich homogen wiedergegeben ist. Vielmehr ist die Darstellung des Objekts, wie sie in Figur 2 a) idealisiert dargestellt ist, in der Realität mit verschiedenen Abbildungsfehlern überlagert, beispielsweise einem statistischen Rauschen. Die sich hieraus ergebende Situation ist in der Figur 2 b) dargestellt.

Die Figur 2 b) zeigt dabei den exakt selben Bildausschnitt wie die Figur 2 a), wobei jedoch in der Objektdarstellung 104 der Figur 2 b) die Bildinformationen der Messpunkte 106 aufgrund eines statistischen Rauschens statistisch verteilt um den eigentlich zu erwartenden Wert 150 gestreut sind. Bei der in Figur 2 b) dargestellten Streuung handelt es sich um eine sehr stark ausgeprägte Streuung, die idealerweise in diesem Ausmaß nicht vorkommen sollte. Es ist jedoch durchaus möglich, dass solche Streuung bei Messungen mit einem Computertomographen auftreten Dabei weichen die Bildinformationen der Messpunkte 106 um teilweise mehr als 20 Einheiten der dargestellten Messgröße nach oben oder unten von dem eigentlichen Wert der Bildinformation von 150 ab, was einer relativen Abweichung von mehr als 10% des eigentlichen Messwerts entspricht.

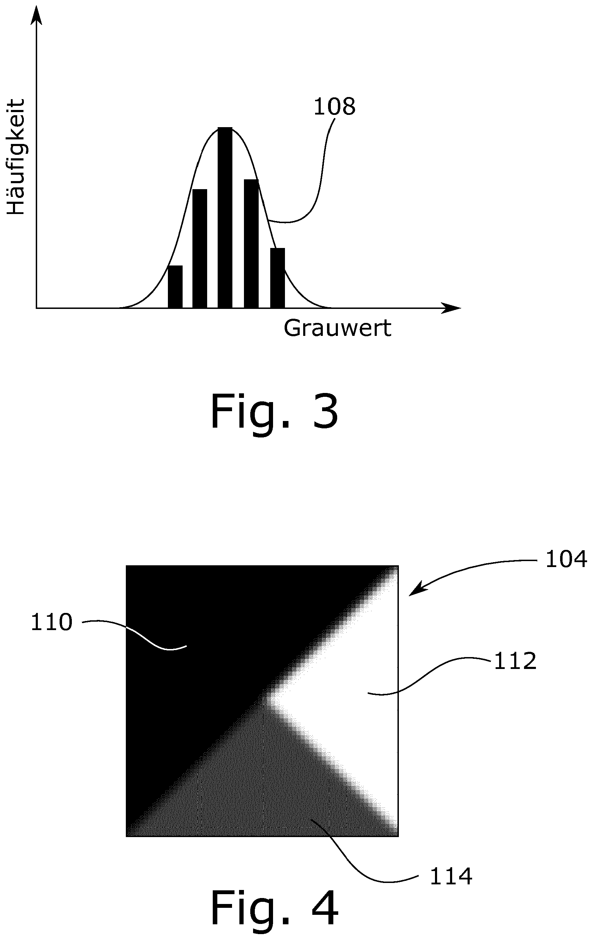

Eine Verteilung der Grauwerte, wie sie in Figur 2 b) exemplarisch dargestellt sind, ist in der Figur 3 schematisch dargestellt. Dabei ist die Häufigkeit eines bestimmten Grauwertes über dem entsprechenden Grauwert aufgetragen. Da es sich bei dem Rauschen, welches die Abweichungen der Bildinformationen der Figur 2 b) von der idealisierten Darstellung der Figur 2 a) verursacht, um einen statistischen Prozess handelt, sind die Grauwerte im Allgemeinen Gauß-förmig um einen Erwartungswert des Grauwertes verteilt. In diesem Fall wäre beispielsweise in der Mitte der dargestellten Gauß-Verteilung 108 ein Wert von 150 als Erwartungswert anzunehmen, welcher der eigentlichen Bildinformation entsprechend der Figur 2 a) entspricht.

Aus den Parametern der die Bildinformationen der Figur 2 b) beschreibenden Gauß-Kurve 108 kann nach einer Ausführungsform eine Aussage über die Stärke des statistischen Rauschens, wie es in der Figur 2 b) exemplarisch dargestellt ist, getroffen werden. Beispielsweise kann für eine Abschätzung der Stärke des statistischen Rauschens die Standardabweichung der Gauß-Kurve 108 herangezogen werden. Exemplarisch kann beispielsweise für die Gauß-Kurve der Figur 3 angenommen werden, dass die Standardabweichung zu einem Zahlenwert von 8 ermittelt wird. Aus dieser Information kann beispielsweise abgeschätzt werden, dass die Grauwerte der Messpunkte 106 der Figur 2 b) in einem Bereich von 150 ± 8 liegen.

An dieser Stelle ist anzumerken, dass die gewählten Zahlenwerte für Grauwerte und Standardabweichungen lediglich aus exemplarischen Gründen gewählt wurden. Im Rahmen einer tatsächlich stattfindenden Messung kann ein aus der Messung und der Verarbeitung der Messergebnisse resultierendes Rauschen durchaus stärker oder schwächer ausgeprägt sein, als in dem exemplarisch beschriebenen Fall.. Gleichermaßen ist auch die Abstufung der Grauwerte auf eine Codierung über 8-Bit, also Zahlenwerte zwischen 0 und 255 nur aus exemplarischen Gründen gewählt. Es ist durchaus möglich, für eine feinere Auflösung auch eine Codierung über 16 Bit, oder 32 Bit, oder mehr vorgesehen sein, sodass Zahlenwerte zwischen 0 und 65.535, oder mehr für die Abstufung der Bildinformationen zur Verfügung stehen.

Aus der Kenntnis, dass die Grauwerte der Objektdarstellung 104 der Figur 2 b) mit einem Fehler von ± 24 Einheiten der dargestellten Messgröße behaftet sind, kann bestimmt werden, wie sich dieser Fehler auf die Bestimmung der Lage von Materialgrenzflächen 100 und letztendlich auf die Distanzwerte des Distanzfeldes niederschlägt. Hierzu kann beispielsweise eine Rechenvorschrift ermittelt werden, anhand derer aus den Bildinformationen einer Objektdarstellung über eine Bestimmung der Fehlerfortpflanzung eine Unsicherheit der Distanzwerte ermittelt werden kann. Beispielsweise kann der Fehler eines Distanzwertes aus dem Quotienten der ermittelten Stärke des statistischen Rauschens und dem Gradienten der Bildinformationen im Bereich der betrachteten Bildinformationen abgeschätzt werden.

Üblicherweise weicht eine Objektdarstellung, wie sie beispielsweise mit einem Computertomographen aufgenommen wird, von der idealisierten Darstellung der Figur 2 ab, da im Allgemeinen unterschiedliche Materialbeschaffenheiten in unterschiedlichen Bereichen abgebildet werden. Hierzu ist beispielsweise exemplarisch in der Figur 4 eine Objektdarstellung 104 gezeigt, bei der in drei Bereichen der Objektdarstellung jeweils unterschiedliche Bildinformationen abgebildet sind. Beispielsweise kann es sich bei dem oben links dargestellten ersten Bereich 110, welcher im Wesentlichen schwarz ist, um Umgebungsluft handeln, während die helleren Bereiche 112 und 114 rechts und unten in dem dargestellten Bildausschnitt beispielsweise ein Metall oder einen Kunststoff darstellen.

Das zuvor beschriebene statistische Rauschen schlägt sich dabei in den unterschiedlichen Bereichen aufgrund der unterschiedlichen Bildinformationen verschieden stark nieder. So ist beispielsweise zu beobachten, dass in dem zweiten Bereich 112, welcher im Wesentlichen weiß ist, das Rauschen stärker ausgeprägt ist , als in dem schwarzen Bereich 110. Folglich würde eine globale Bestimmung einer Stärke des Rauschens und eine entsprechende Abschätzung der Unsicherheit der aus den Grauwerten abgeleiteten Distanzwerte der Materialgrenzflächen aller Punkte der dargestellten Objektdarstellung 104 anhand dieser Stärke den Bedingungen in den einzelnen Bereichen 110, 112 und 114 nicht gerecht. Daher ist nach einer Ausführungsform vorgesehen, dass die Objektdarstellung 104 zunächst in Bereiche unterteilt wird, wobei im vorliegenden Fall beispielsweise der obere linke Bereich 110, der rechte weiße Bereich 112 und der untere graue Bereich 114 selektiert werden könnten. Für jeden dieser Bereiche 110, 112 und 114 würde dann, wie zuvor beschrieben wurde, jeweils die Stärke des statistischen Rauschens der Bildinformationen ermittelt und die Unsicherheit der Messdaten bzw. entsprechend abgeleiteter Distanzwerte abgeschätzt.

Wie in der Figur 4 ferner zu erkennen ist, existieren in einer Objektdarstellung 104 üblicherweise neben den homogenen Bereichen 110, 112 und 114 auch Bereiche, in denen die Bildinformationen langsam von einem ersten Wert zu einem zweiten Wert übergehen. In solchen Bereichen kann die Stärke des statistischen Rauschens beispielsweise abgeschätzt werden, indem zwischen den entsprechend ermittelten Werten in den Bereichen beispielsweise 110 und 112 interpoliert wird.

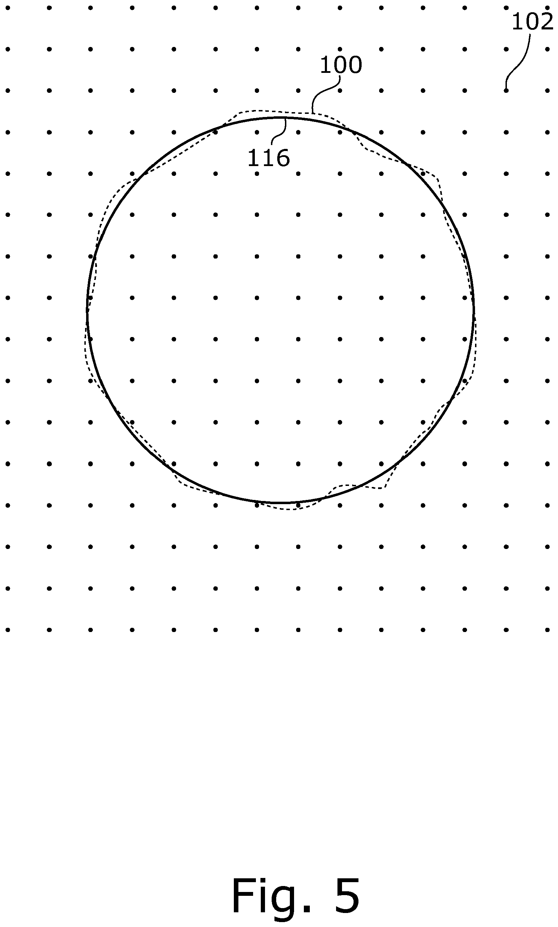

Die Figur 5 zeigt eine schematische Darstellung eines durch die Materialgrenzfläche 100 repräsentierten Objekts in einem Distanzfeld mit einer Vielzahl von Datenpunkten 102. Bei dem dargestellten Objekt kann es sich beispielsweise um eine Bohrung in einem Körper handeln, sodass außerhalb des durch die Materialgrenzfläche 100 umschriebenen Bereiches das Material des dargestellten Körpers, beispielsweise Metall, existiert, während innerhalb des durch die Materialgrenzfläche 100 umschriebenen Bereiches Luft abgebildet ist.

In der Figur 5 ist der Verlauf der Materialgrenzfläche 100 äußerst uneben abgebildet. Ein solcher Verlauf einer Materialgrenzfläche in einer Bohrung ist jedoch in der Regel bei einer Untersuchung eines Werkstückes, welches eigentlich eine kreisrunde Bohrung aufweisen soll, nicht zu beobachten. Die Wahl stark überzeichneten Abweichungen der abgebildeten Geometrie von einer Soll-Geometrie dienen im vorliegenden Fall lediglich einer besseren Illustration des Sachverhaltes. Der Verlauf der Materialgrenzfläche 100 ist dabei, wie mit Bezug zu Figur 1 erklärt wurde, durch Distanzwerte kodiert, welche den einzelnen Datenpunkten 102 zugeordnet sind.

In dem Bildausschnitt der Figur 5 wurde eine Soll-Geometrie 108 in die durch das Distanzfeld repräsentierte Geometrie eines dargestellten Objekts eingepasst. In der in Figur 2 dargestellten Variante kann die Soll-Geometrie 116 beispielsweise durch das Verfahren der kleinsten Quadrate eingepasst werden. Dabei wird die Soll-Geometrie 116 so in die durch die Distanzwerte der Datenpunkte 102 codierte Materialgrenzfläche 100 eingepasst, dass der mittlere quadratische Abstand zwischen der Soll-Geometrie 116 und der Materialgrenzfläche 100 minimal ist. Aus der eingepassten Soll-Geometrie 116 können dann Informationen bezüglich beispielsweise der Lage der Soll-Geometrie 116 bzw. der durch die Soll-Geometrie 116 repräsentierten Bohrung in Figur 5 sowie bezüglich des Durchmessers der Bohrung abgeleitet werden.

Die in Figur 5 gewählte Soll-Geometrie 116, nämlich eine kreisförmige Geometrie, dient lediglich als Beispiel. Analoge Darstellungen wären auch für Soll-Geometrien, wie Ecken, Kanten, Quader oder ähnliche Geometrien, möglich.

Durch den direkten Fit der Soll-Geometrie 116 an die durch das Distanzfeld repräsentierte Materialgrenzfläche 100 mittels der Distanzwerte der Datenpunkte 102 ist, unter der Annahme, dass die durch das Distanzfeld repräsentierte Materialgrenzfläche 100 mit der durch die Messdaten gegebenen, maximalen Genauigkeit ermittelt wurde, eine entsprechend genaue Einpassung einer Soll-Geometrie 116 möglich. Dies wird beispielsweise bei dem Verfahren der kleinsten Fehlerquadrate schnell evident.

In dem Verfahren der kleinsten Fehlerquadrate, auch als Gauß-Fit bekannt, wird versucht, eine Funktion so relativ zu einer Menge von Messpunkten zu positionieren, dass der quadratische Abstand der Messpunkte von der Funktion minimal ist. Hierzu muss zunächst die Menge von Messpunkten, im vorliegenden Fall die Lage der Materialgrenzfläche 100 bestimmt werden. Anschließend muss für die Menge der so ermittelten Punkte auf der Materialgrenzfläche 100 der jeweilige Abstand der Punkte von der einzupassenden Soll-Geometrie 116 ermittelt werden. Anschließend kann die Lage der Soll-Geometrie 116 so variiert werden, dass das der mittlere quadratische Abstand zwischen den Punkten auf der Materialgrenzfläche 100 und den korrespondierenden Punkten auf der Soll-Geometrie 116 minimiert ist.

Der zuvor beschriebene Zwischenschritt der Bestimmung von Punkten auf einer Materialgrenzfläche 100 kann jedoch entfallen, wenn die Materialgrenzflächen 100 durch ein Distanzfeld kodiert sind. In diesem Fall kann nämlich die anschließende Bestimmung der Abstände zwischen Punkten auf der Oberfläche der Soll-Geometrie 116 und den korrespondierenden Punkten auf der Materialgrenzfläche 100 dadurch umgesetzt werden, dass für Datenpunkte 102 in der Nähe der Soll-Geometrie 116 die jeweiligen Distanzwerte der Datenpunkte 102 und die jeweiligen Abstände der Datenpunkte 102 von der Soll-Geometrie 116 ermittelt werden. Aus der jeweiligen Differenz der so ermittelten Abstände der Datenpunkte 102 von der Soll-Geometrie 116 und der ausgelesenen Distanzwerte kann dann jeweils der Abstand der Soll-Geometrie 116 von der Materialgrenzfläche 100 in der Nähe der Datenpunkte 102 bestimmt werden. Die Einpassung der Soll-Geometrie 116 kann dann erfolgen, indem die Soll-Geometrie 116 so positioniert wird, dass die wie zuvor beschrieben ermittelten Abstände zwischen der Soll-Geometrie 116 und der Materialgrenzfläche 100 minimiert werden. Die Ermittlung von Punkten auf der Materialgrenzfläche 100 und damit verbundene Ungenauigkeiten entfallen hierbei.

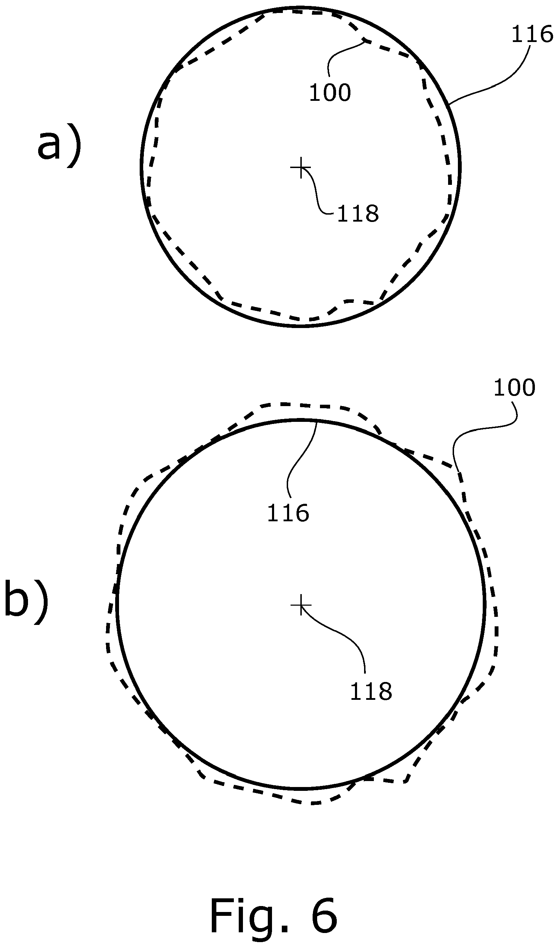

Neben dem zuvor beschriebenen Fit einer Soll-Geometrie 116 anhand der Methode der kleinsten Quadrate kann es in verschiedenen Situationen auch sinnvoll sein, andere Methoden zur Einpassung der Soll-Geometrie 116 in die durch die Distanzwerte codierte Materialgrenzfläche 100 zu benutzen. Hierzu sind in Figur 6 zwei mögliche Anpassungsverfahren dargestellt, nämlich die Einpassung einer Soll-Geometrie 116 als umschreibende Figur in Figur 6 a), sowie die Einpassung der Soll-Geometrie 116 als eingeschriebene Figur in Figur 6 b). Auch in der Figur 6 wurde wiederum eine Kreisform als Soll-Geometrie 116 gewählt, um den Sachverhalt zu illustrieren.

In Figur 6 a) ist die Soll-Geometrie 116 als umschreibende Figur an die Materialgrenzfläche 100 eingepasst. Das in Figur 5 dargestellte Distanzfeld bzw. die Datenpunkte 102 des Distanzfeldes sind in der Figur 6 aus Gründen der Übersichtlichkeit nicht dargestellt. Wie in Figur 6 a) erkennbar ist, handelt es sich bei einer umschreibenden Figur um eine Figur, welche so angeordnet ist, dass sämtliche Punkte der Materialgrenzfläche 100 innerhalb der eingepassten Soll-Geometrie 116 angeordnet sind. Die Einpassung einer Soll-Geometrie 116 als umschreibende Figur kann beispielsweise dann sinnvoll sein, wenn es sich bei der Geometrie, welche in Figur 6 a) dargestellt ist, beispielsweise um einen aus einem Objekt hervorstehenden Bolzen handelt. In diesem Fall ist nämlich relevant, welchen maximalen Durchmesser der Bolzen hat, sodass entschieden werden kann, ob er in eine entsprechende Bohrung passt oder eben nicht.

In Figur 6 b) ist demgegenüber eine Einpassung einer Soll-Geometrie 116 in einer Materialgrenzfläche 100 gezeigt, bei der die Soll-Geometrie 116 als eingeschriebene Figur in die Materialgrenzfläche 100 eingepasst ist. Dies bedeutet, dass die Soll-Geometrie 116 vollständig innerhalb der Materialgrenzfläche 100 angeordnet ist. Diese Form der Einpassung kann beispielsweise zur Analyse von Bohrungen oder Löchern in einem untersuchten Objekt relevant sein. In diesem Fall ist nämlich der Mindestdurchmesser einer Bohrung relevant, um zu entscheiden, ob die Bohrung zur Aufnahme eines entsprechenden gegenstückigen Elementes geeignet ist. Bei dem Vergleich der Figuren 6 a) und 6 b) ist zu beachten, dass durch die Wahl einer eingeschriebenen oder umschreibenden Figur nicht nur der aus der eingepassten Soll-Geometrie 116 bestimmte Durchmesser der untersuchten Geometrie zu unterschiedlichen Ergebnissen führt, sondern auch der Mittelpunkt 118 der eingefassten Soll-Geometrie 116 unterschiedlich ausfallen kann.

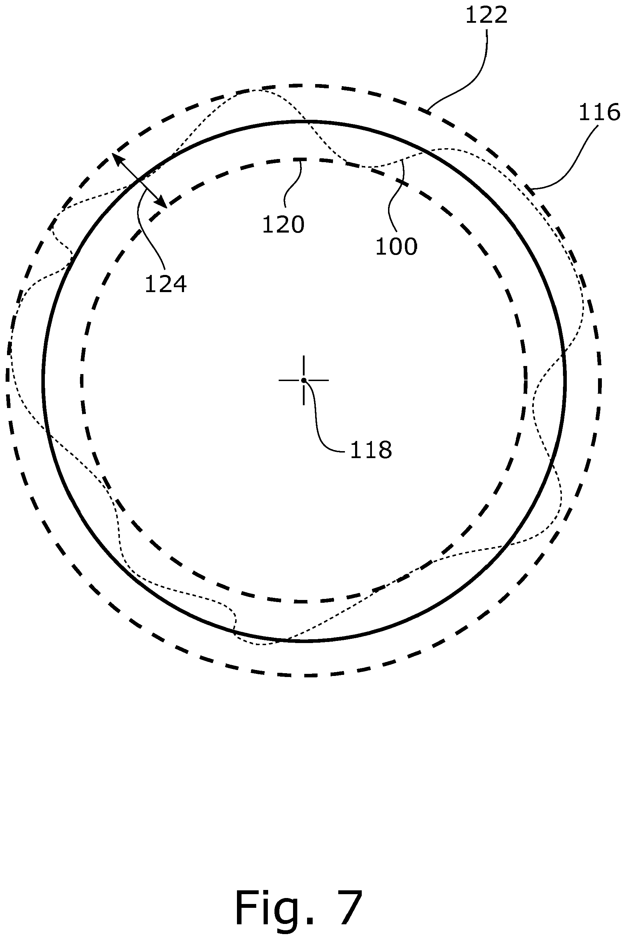

Neben den zuvor beschriebenen Varianten zur Einpassung einer Soll-Geometrie 116 mittels einer mittleren quadratischen Abweichung oder der Einpassung einer Soll-Geometrie 116 als eingeschriebene oder umschreibende Figur, kann, wie in Figur 7 dargestellt, ferner auch eine Einpassung einer Soll-Geometrie 116 im Zuge eines Minimum-Zonen-Fits erfolgen.

In der Figur 7 ist hierzu eine Materialgrenzfläche 100 dargestellt, welche gegenüber den in Figuren 5 und 6 dargestellten Materialgrenzflächen 100 eine deutlich stärker von einer Kreisform abweichenden Geometrie aufweist. Diese Geometrie wurde erneut lediglich zur besseren Illustration gewählt.

Bei einem Minimum-Zonen-Fit wird im Allgemeinen die Soll-Geometrie 116 sowohl als eingeschriebene Figur als auch als umschreibende Figur in die Materialgrenzfläche 100 eingepasst. Die entsprechende eingeschriebene Figur ist mit dem Bezugszeichen 120 gekennzeichnet, während die umschreibende Figur das Bezugszeichen 122 trägt. Aus der eingeschriebenen Figur 120 und der umschreibenden Figur 122 wird dann die Position der Soll-Geometrie 116 dadurch ermittelt, dass die Soll-Geometrie 116 genau so positioniert wird, dass sie zu der umschreibenden Figur 122 und zu der eingeschriebenen Figur 120 jeweils denselben Abstand 124 aufweist. Dabei werden die eingeschriebene Figur 120 sowie die umschreibende Figur 122 so positioniert, dass ihr Mittelpunkt 118 identisch ist.

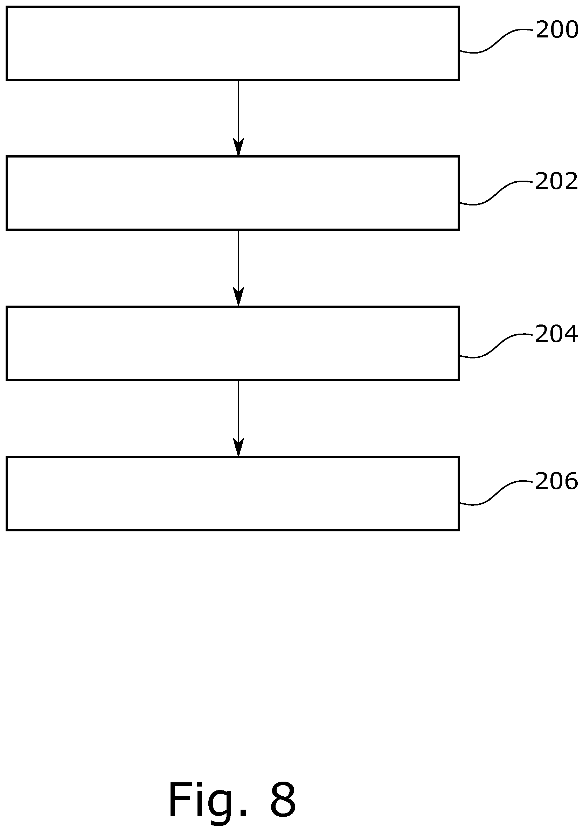

Die Figur 8 zeigt ein Flussdiagramm des erfindungsgemäßen Verfahrens. Dabei werden in einem ersten Verfahrensschritt 200 zunächst die Messdaten der Objektdarstellung ermittelt. Hierzu kann sowohl eine Messung an dem darzustellenden Objekt durchgeführt werden, als auch eine vorhandene Objektdarstellung beispielsweise aus einem Speichermedium ausgelesen werden. Die Messung kann beispielsweise mithilfe eines Computertomographen durchgeführt werden, was eine zerstörungsfreie Untersuchung des darzustellenden Objektes ermöglicht. Aus den in Schritt 200 ermittelten Messdaten bzw. Bildinformationen der Objektdarstellung wird dann in Schritt 202 ein Distanzfeld ermittelt, welches eine Vielzahl von die Materialgrenzflächen 100 des dargestellten Objekts beschreibenden Distanzwerten aufweist. Dabei beschreibt ein Distanzwert für einen bestimmten Punkt des Distanzfeldes wie weit eben dieser Punkt von der in der Objektdarstellung nächstliegenden Materialgrenzfläche des dargestellten Objekts entfernt ist.

Das Distanzfeld kann dabei sowohl in gerasterter Form vorliegen, bei der jedem Rasterpunkt jeweils wenigstens ein Distanzwert zugeordnet ist, oder in Form eines skalaren Distanzfelds abgelegt sein, sodass durch das skalare Distanzfeld jedem beliebigen Punkt innerhalb der Objektdarstellung ein Distanzwert zugeordnet ist.

Nach der Ermittlung des Distanzfelds aus den Bildinformationen wird anschließend in Schritt 204 die Stärke eines statistischen Rauschens ermittelt, welches die Bildinformationen der ermittelten Objektdarstellung überlagert. Ein solches statistisches Rauschen kann dabei verschiedene Ursachen haben, welche üblicherweise in der Abbildungsvorrichtung begründet liegen, welche zur Erzeugung der Objektdarstellung bzw. der Ermittlung der Messdaten verwendet wird. Die Stärke des statistischen Rauschens kann beispielsweise ermittelt werden, indem eine Statistik der Bildinformationen erstellt wird, wobei aus der Statistik der Bildinformationen dann die Standardabweichung der Bildinformationen als Rauschen interpretiert werden kann. Es sind jedoch auch andere Ansätze möglich, mit denen die Stärke des statistischen Rauschens abgeschätzt werden kann.

Auf Grundlage der zuvor ermittelten Stärke des statistischen Rauschens wird dann in einem Verfahrensschritt 206 ermittelt, wie groß die Unsicherheit der zuvor ermittelten Distanzwerte des Distanzfeldes ist. Hierzu kann beispielsweise eine Rechenvorschrift abgeleitet werden, anhand derer aus den Bildinformationen der Objektdarstellung die Lage einer Materialgrenzfläche bzw. der zugehörige Distanzwert des Distanzfeldes ermittelt werden kann. Durch Bestimmung der zugehörigen Fehlerfortpflanzung der Rechenvorschrift kann dann die Unsicherheit eines Distanzwerts abgeleitet werden, indem die Stärke des statistischen Rauschens als Fehler der jeweiligen Bildinformation angenommen wird. Beispielsweise kann die Unsicherheit eines Distanzwertes aus dem Quotienten der Stärke des statistischen Rauschens und dem Gradienten der Bildinformationen im Bereich des Distanzwertes abgeleitet werden.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 100: Materialgrenzfläche
- 102: Datenpunkt
- 104: Objektdarstellung
- 106: Bildpunkt/Messpunkt
- 108: Gauß-Kurve
- 110: erster Bereich
- 112: zweiter Bereich
- 114: dritter Bereich
- 116: Soll-Geometrie
- 118: Mittelpunkt
- 120: eingeschriebene Figur
- 122: umschreibende Figur
- 124: Abstand

## Patentansprüche

1. Computer-implementiertes Verfahren zur Bestimmung von Unsicherheiten in Messdaten aus einer Messung eines Objekts, wobei durch die Messung eine digitale Darstellung des Objekts erzeugt wird, wobei die Objektdarstellung (104) eine Vielzahl von Bildinformationen des Objekts aufweist, wobei eine Bildinformation einen Wert einer Messgröße für das Objekt an einer definierten Position des Objekts anzeigt, wobei die Bildinformationen mit einem statistischen Rauschen überlagert sind, wobei das Verfahren die nachfolgenden Schritte aufweist:
• ermitteln (200) der Objektdarstellung (104),
• ermitteln (202) eines Distanzfeldes aus den Bildinformationen der Objektdarstellung (104), wobei das Distanzfeld eine Vielzahl von Distanzwerten aufweist, wobei ein Distanzwert für einen bestimmten Punkt des Distanzfeldes den kürzesten Abstand des Punktes zu einer nächstgelegenen Materialgrenzfläche (100) des Objekts angibt,
• ermitteln (204) einer Stärke des statistischen Rauschens der Bildinformationen,
• ermitteln (206) einer Unsicherheit der Distanzwerte des Distanzfeldes auf Grundlage der Stärke des statistischen Rauschens und
• ermitteln einer Unsicherheit der Lage wenigstens eines Punktes auf wenigstens einer Materialgrenzfläche (100) aus der Unsicherheit der Distanzwerte des Distanzfeldes.

2. Verfahren nach Anspruch 1, **dadurch gekennzeichnet, dass** das Ermitteln (206) einer Unsicherheit eines Distanzwerts die nachfolgenden Schritte aufweist:
• ermitteln eines Fehlers der Bildinformation eines definierten Punktes des Objekts aus der Stärke des statistischen Rauschens,
• ermitteln einer Rechenvorschrift zur Ermittlung der Distanzwerte aus den Bildinformationen der Objektdarstellung (104),
• ermitteln der Unsicherheit des Distanzwerts aus der Wirkung des Fehlers auf das Ergebnis der Rechenvorschrift.

3. Verfahren nach Anspruch 2, **dadurch gekennzeichnet, dass** die Unsicherheit eines Distanzwerts aus dem Quotienten der Stärke des statistischen Rauschens der dem Distanzwert zugrundeliegenden Bildinformationen und dem Gradienten der Bildinformationen im Bereich des Distanzwerts ermittelt wird.

4. Verfahren nach einem der vorherigen Ansprüche, **dadurch gekennzeichnet, dass** das Verfahren ferner die Unterteilung der Bildinformationen in räumliche Bereiche des Objekts umfasst, wobei die Stärke des statistischen Rauschens jeweils separat für die unterschiedlichen räumlichen Bereiche der Bildinformationen ermittelt wird.

5. Verfahren nach Anspruch 4, **dadurch gekennzeichnet, dass** die Stärke des statistischen Rauschens für einen Bereich aus den Bildinformationen einer Teilmenge der Messpunkte (106) des Bereichs ermittelt wird.

6. Verfahren nach Anspruch 4 oder 5 **dadurch gekennzeichnet, dass** das Ermitteln (204) der Stärke des statistischen Rauschens der Bildinformationen für einen der Bereiche die nachfolgenden Schritte aufweist:
• ermitteln eines Durchschnittswerts der Bildinformationen des Bereichs,
• ermitteln der mittleren Abweichung der Bildinformationen des Bereichs von dem Durchschnittswert, und
• definieren der mittleren Abweichung als Stärke des statistischen Rauschens der Bildinformation.

7. Verfahren nach einem der Ansprüche 1 bis 5, **dadurch gekennzeichnet, dass** es sich bei der Stärke des statistischen Rauschens um die Standardabweichung des statistischen Rauschens handelt.

8. Verfahren nach einem der vorherigen Ansprüche, **dadurch gekennzeichnet, dass** die Stärke des statistischen Rauschens für einen Punkt der Objektdarstellung (104) aus den Bildinformationen innerhalb einer definierten Umgebung um den Punkt bestimmt wird.

9. Verfahren nach einem der vorherigen Ansprüche, **dadurch gekennzeichnet, dass** das Verfahren ferner das Ermitteln wenigstens einer Abmessung des Objekts aus den Distanzwerten des Distanzfeldes und das Ermitteln einer Unsicherheit der Abmessung auf Grundlage der Unsicherheit der Distanzwerte aufweist.

10. Verfahren nach Anspruch 9, **dadurch gekennzeichnet, dass** das Ermitteln einer Abmessung des Objekts aus den Distanzwerten des Distanzfelds das Ermitteln und Einpassen einer Soll-Geometrie (116) des Objekts in das Distanzfeld durch Anwendung eines Fit-Verfahrens und das Ermitteln der Abmessungen des Objekts anhand der eingepassten Soll-Geometrie (116) aufweist.

11. Verfahren nach Anspruch 10, **dadurch gekennzeichnet, dass** zum Einpassen der ermittelten Soll-Geometrie (116) das Verfahren der kleinsten Quadrate und/oder ein Minimum-Zonen Fit angewendet wird und/oder dass die ermittelte Soll-Geometrie (116) als eingeschriebene oder umschreibende Figur (120, 122) in das Distanzfeld eingepasst wird.

12. Verfahren nach Anspruch 10 oder 11, **dadurch gekennzeichnet, dass** die Soll-Geometrie (116) des Objekts durch eine Nutzereingabe vorgegeben wird und/oder aus einer CAD-Datei ermittelt wird und/oder aus dem Distanzfeld ermittelt wird.

13. Verfahren nach einem der vorhergehenden Ansprüche, **dadurch gekennzeichnet, dass** das Ermitteln (202) des Distanzfeldes die nachfolgenden Schritte umfasst:
• ermitteln der Lage von Materialgrenzflächen (100) aus den Bildinformationen der Objektdarstellung (104),
• ermitteln einer jeweils zu einem Datenpunkt (102) nächstliegenden Materialgrenzfläche (100) für die Datenpunkte (102) des Distanzfeldes,
• ermitteln des jeweiligen Abstands der Datenpunkte (102) von der jeweiligen nächstliegenden Materialgrenzfläche (100), und
• zuordnen des jeweils ermittelten Abstands zu den jeweiligen Datenpunkten (102) als Distanzwert.

14. Verfahren nach einem der vorhergehenden Ansprüche, **dadurch gekennzeichnet, dass** es sich bei der Objektdarstellung (104) um eine gerasterte Darstellung des Objekts handelt, wobei die gerasterte Darstellung eine Vielzahl von in einem Raster angeordneten Messpunkten (106) einer Messung des Objekts aufweist, wobei ein Messpunkt (106) wenigstens eine Bildinformation aufweist.

15. Verfahren nach einem der vorhergehenden Ansprüche, **dadurch gekennzeichnet, dass** es sich bei der Messung um eine computertomographische Messung handelt, wobei die Bildinformation die lokale Röntgenabsorption des Objekts an der Stelle des Messpunkts (106) beschreibt.

16. Computerprogrammprodukt mit auf einem Computer ausführbaren Instruktionen, welche auf einem Computer ausgeführt den Computer dazu veranlassen, das Verfahren nach einem der vorhergehenden Ansprüche durchzuführen.

## Claims

1. Computer-implemented method for determining uncertainties in measurement data from a measurement of an object, wherein a digital representation of the object is generated by the measurement, wherein the object representation (104) has a plurality of items of image information, wherein an item of image information indicates a value of a measurement variable for the object at a defined position of the object, wherein a statistical noise is superimposed on the image information, wherein the method has the following steps:
• determining (200) the object representation (104),
• determining (202) a distance field from the image information relating to the object representation (104), wherein the distance field has a plurality of distance values, wherein a distance value for a particular point in the distance field indicates the shortest distance between the point and a closest material boundary surface (100) of the object,
• determining (204) a strength of the statistical noise in the image information,
• determining (206) an uncertainty of the distance values of the distance field on the basis of the strength of the statistical noise, and
• determining an uncertainty of the position of at least one point on at least one material boundary surface (100) from the uncertainty of the distance values of the distance field.

2. Method according to claim 1, **characterised in that** the determination (206) of an uncertainty of a distance value has the following steps:
• determining an error in the image information relating to a defined point of the object from the strength of the statistical noise,
• determining a computing rule for determining the distance values from the image information relating to the object representation (104),
• determining the uncertainty of the distance value from the effect of the error on the result of the computing rule.

3. Method according to claim 2, **characterised in that** the uncertainty of a distance value is determined from the quotient of the strength of the statistical noise in the image information on which the distance value is based and the gradient of the image information in the region of the distance value.

4. Method according to any of the preceding claims, **characterised in that** the method also comprises subdividing the image information into spatial regions of the object, wherein the strength of the statistical noise is respectively determined separately for the different spatial regions of the image information.

5. Method according to claim 4, **characterised in that** the strength of the statistical noise for a region is determined from the image information relating to a subset of the measurement points (106) of the region.

6. Method according to claim 4 or 5, **characterised in that** the determination (204) of the strength of the statistical noise in the image information for one of the regions has the following steps:
• determining an average value of the image information relating to the region,
• determining the mean deviation of the image information relating to the region from the average value, and
• defining the mean deviation as strength of the statistical noise in the image information.

7. Method according to any of claims 1 to 5, **characterised in that** the strength of the statistical noise is the standard deviation of the statistical noise.

8. Method according to any of the preceding claims, **characterised in that** the strength of the statistical noise for a point in the object representation (104) is determined from the image information within a defined environment around the point.

9. Method according to any of the preceding claims, **characterised in that** the method also comprises determining at least one dimension of the object from the distance values of the distance field and determining an uncertainty of the dimension on the basis of the uncertainty of the distance values.

10. Method according to claim 9, **characterised in that** the determination of a dimension of the object from the distance values of the distance field comprises determining and fitting a target geometry (116) of the object into the distance field by using a fit method and determining the dimensions of the object on the basis of the target geometry (116) which has been fitted in.

11. Method according to claim 10, **characterised in that** the least squares method and/or a minimum zone fit is used to fit in the determined target geometry (116), and/or in that the determined target geometry (116) is fitted into the distance field as an inscribed or circumscribing figure (120, 122).

12. Method according to claim 10 or 11, **characterised in that** the target geometry (116) of the object is specified by a user input and/or is determined from a CAD file and/or is determined from the distance field.

13. Method according to any of the preceding claims, **characterised in that** the determination (202) of the distance field comprises the following steps:
• determining the position of material boundary surfaces (100) from the image information relating to the object representation (104),
• determining a material boundary surface (100) which is closest to a data point (102) in each case for the data points (102) of the distance field,
• determining the respective distance between the data points (102) and the respective closest material boundary surface (100), and
• assigning the respectively determined distance to the respective data points (102) as a distance value.

14. Method according to any of the preceding claims, **characterised in that** the object representation (104) is a rastered representation of the object, wherein the rastered representation has a plurality of measurement points (106) of a measurement of the object which are arranged in a raster, wherein a measurement point (106) has at least one item of image information.

15. Method according to any of the preceding claims, **characterised in that** the measurement is a computer tomographic measurement, wherein the image information describes the local X-ray absorption of the object at the location of the measurement point (106).

16. Computer program product having instructions which can be executed on a computer and, when executed on a computer, cause the computer to carry out the method according to any of the preceding claims.

## Revendications

1. Procédé mis en œuvre par ordinateur pour déterminer des incertitudes dans des données de mesure à partir d'une mesure d'un objet, dans lequel une représentation numérique de l'objet est générée par la mesure, dans lequel la représentation d'objet (104) comporte une pluralité d'informations d'image de l'objet, dans lequel une information d'image affiche une valeur d'une grandeur de mesure pour l'objet à une position définie de l'objet, dans lequel les informations d'image sont superposées avec un bruit statistique, le procédé comprenant les étapes consistant à :
• déterminer (200) la représentation d'objet (104),
• déterminer (202) un champ de distance à partir des informations d'image de la représentation d'objet (104), le champ de distance comportant une pluralité de valeurs de distance, une valeur de distance pour un point défini du champ de distance indiquant la distance la plus courte du point à une interface de matériau (100) de l'objet la plus proche,
• déterminer (204) une intensité du bruit statistique des informations d'image,
• déterminer (206) une incertitude des valeurs de distance du champ de distance sur la base de l'intensité du bruit statistique et
• déterminer une incertitude de la position d'au moins un point sur au moins une interface de matériau (100) à partir de l'incertitude des valeurs de distance du champ de distance.

2. Procédé selon la revendication 1, **caractérisé en ce que** la détermination (206) d'une incertitude d'une valeur de distance comprend les étapes consistant à :
• déterminer une erreur de l'information d'image d'un point défini de l'objet à partir de l'intensité du bruit statistique ;
• déterminer une règle de calcul pour déterminer les valeurs de distance à partir des informations d'image de la représentation d'objet (104),
• déterminer l'incertitude de la valeur de distance à partir de l'effet de l'erreur sur le résultat de la règle de calcul.

3. Procédé selon la revendication 2, **caractérisé en ce que** l'incertitude d'une valeur de distance est déterminée à partir du quotient de l'intensité du bruit statistique des informations d'image basées sur la valeur de distance et à partir du gradient des informations d'image dans la région de la valeur de distance.

4. Procédé selon l'une quelconque des revendications précédentes, **caractérisé en ce que** le procédé comprend en outre la subdivision des informations d'image en régions spatiales de l'objet, l'intensité du bruit statistique étant déterminée respectivement séparément pour les différentes régions spatiales des informations d'image.

5. Procédé selon la revendication 4, **caractérisé en ce que** l'intensité du bruit statistique pour une région est déterminée à partir des informations d'image d'un sous-ensemble des points de mesure (106) de la région.

6. Procédé selon les revendications 4 ou 5, **caractérisé en ce que** la détermination (204) de l'intensité du bruit statistique des informations d'image pour l'une des régions comprend les étapes consistant à :
• déterminer une valeur moyenne des informations d'image de la région,
• déterminer l'écart moyen des informations d'image de la région par rapport à la valeur moyenne, et
• définir l'écart moyen en tant qu'intensité du bruit statistique de l'information d'image.

7. Procédé selon l'une quelconque des revendications 1 à 5, **caractérisé en ce que** l'intensité du bruit statistique représente l'écart type du bruit statistique.

8. Procédé selon l'une quelconque des revendications précédentes, **caractérisé en ce que** l'intensité du bruit statistique pour un point de la représentation d'objet (104) est définie à partir des informations d'image dans un environnement défini autour du point.

9. Procédé selon l'une quelconque des revendications précédentes, **caractérisé en ce que** le procédé comprend en outre la détermination d'au moins une dimension de l'objet à partir des valeurs de distance du champ de distance et la détermination d'une incertitude de la dimension sur la base de l'incertitude des valeurs de distance.

10. Procédé selon la revendication 9, **caractérisé en ce que** la détermination d'une dimension de l'objet à partir des valeurs de distance du champ de distance comporte la détermination et l'ajustement d'une géométrie cible (116) de l'objet dans le champ de distance en appliquant un procédé d'ajustement et la détermination des dimensions de l'objet au moyen de la géométrie cible (116) ajustée.

11. Procédé selon la revendication 10, **caractérisé en ce que** pour ajuster la géométrie cible (116) déterminée, le procédé des moindres carrés et/ou un ajustement de zone minimale est appliqué et/ou **en ce que** la géométrie cible (116) déterminée est ajustée dans le champ de distance en tant que figure écrite ou circonscrite (120, 122).

12. Procédé selon les revendications 10 ou 11, **caractérisé en ce que** la géométrie cible (116) de l'objet est prédéfinie par une entrée d'utilisateur et/ou est déterminée à partir d'un fichier de CAO et/ou est déterminée à partir du champ de distance.

13. Procédé selon l'une quelconque des revendications précédentes, **caractérisé en ce que** la détermination (202) du champ de distance comprend les étapes consistant à :
• déterminer la position d'interfaces de matériau (100) à partir des informations d'image de la représentation d'objet (104) ;
• déterminer une interface de matériau (100) la plus proche d'un point de données (102) pour les points de données (102) du champ de distance,
• déterminer la distance respective des points de données (102) par rapport à l'interface de matériau (100) la plus proche respective, et
• attribuer la distance respectivement déterminée aux points de données (102) respectifs en tant que valeur de distance.

14. Procédé selon l'une quelconque des revendications précédentes, **caractérisé en ce que** la représentation d'objet (104) est une représentation tramée de l'objet, dans lequel la représentation tramée comporte une pluralité de points de mesure (106), disposés dans une trame, d'une mesure de l'objet, dans lequel un point de mesure (106) comporte au moins une information d'image.

15. Procédé selon l'une quelconque des revendications précédentes, **caractérisé en ce que** la mesure est une mesure tomographique informatique, dans lequel l'information d'image décrit l'absorption locale de rayons X de l'objet à l'emplacement du point de mesure (106).

16. Produit de programme informatique doté d'instructions exécutables sur un ordinateur qui invitent l'ordinateur, une fois exécutées sur un ordinateur, à réaliser le procédé selon l'une quelconque des revendications précédentes.
